**Europäisches Patentamt**

**European Patent Office**

**Office européen des brevets**

(11) Veröffentlichungsnummer: **0 073 292**
A1

# (12) EUROPÄISCHE PATENTANMELDUNG

(21) Anmeldenummer: **82103622.5**

(22) Anmeldetag: **28.04.82**

(51) Int. Cl.³: **H 01 M 6/18, H 01 M 4/58**

(30) Priorität: **29.08.81 DE 3134288**

(43) Veröffentlichungstag der Anmeldung: **09.03.83**
**Patentblatt 83/10**

(84) Benannte Vertragsstaaten: **DE FR GB**

(71) Anmelder: **VARTA Batterie Aktiengesellschaft, Am Leineufer 51, D-3000 Hannover 21 (DE)**

(72) Erfinder: **Bittihn, Rainer, Königsberger Strasse 34, D-6233 Kelkheim (DE)**
Erfinder: **Wagner, Armin, Im Kleinen Grund 24, D-6233 Kelkheim 3 (DE)**

(74) Vertreter: **Kaiser, Dieter Ralf, Dipl.-Ing., Gundelhardtstrasse 72, D-6233 Kelkheim/Ts. (DE)**

(54) **Galvanische Festkörperzelle, deren aktive Kathodensubstanz aus höherwertigen Metallchloriden besteht.**

(57) Eine bei Raumtemperatur entladbare Festkörperzelle mit einer negativen Li-Elektrode und einem $Li^+$-ionenleitenden Festkörperelektrolyten enthält in der positiven Elektrode als aktives Material ein höherwertiges Metallchlorid wie $FeCl_3$, $MoCl_5$ oder $WCl_5$, dem ein elektronenleitendes Pulver (Fe, Mo, W, Graphit oder Ruß) zugemischt ist. Die Entladung der Zelle verläuft mit guter Coulomb-Ausbeute über mehrere ausgeprägte Spannungplateaus, wobei ein erheblicher Teil der Kapazität bei ca. 3 Volt entnommen wird. Damit ist eine Möglichkeit zur festkörpermäßigen Realisierung von 3 Volt-Zellen gegeben.

EP 0 073 292 A1

ACTORUM AG

COMPLETE DOCUMENT

VARTA Batterie Aktiengesellschaft
3000 Hannover 21, Am Leineufer 51

_Galvanische Festkörperzelle, deren aktive Kathodensubstanz aus höherwertigen Metallchloriden besteht._

Die Erfindung betrifft eine galvanische Festkörperzelle mit einer negativen Lithiumelektrode, einem Festkörperelektrolyten und einer festen, elektronisch-leitendes Material enthaltenden positiven Elektrode, die bei Raumtemperatur entladbar ist.

Die Stromabgabe von Festkörperzellen ist dadurch begrenzt, daß nur die geometrischen Kontaktflächen der Reaktionspartner, insbesondere zwischen dem Festkörperelektrolyten und der Kathode von dem elektrochemischen Umsatz erfaßt werden. Dabei ist die Diffusionsgeschwindigkeit zwischen Festkörpern äußerst gering, was sich in einer geringen Entladetiefe auswirkt.

Eine bessere Ausnutzbarkeit des Kathodenmaterials ist möglich, wenn bei der Entladung ionenleitende Reaktionsprodukte gebildet werden. Solche entstehen beispielsweise bei der Entladung von Metalljodiden. In dem beispielsweise gebildeten Entladeprodukt LiJ bleibt den kleinen $Li^+$-Ionen in dem aus großen $J^-$-Ionen aufgebauten Teilgitter ein gewisser Speilraum für Platzwechselvorgänge und damit eine gute Ionenbeweglichkeit erhalten. Ebenso kann Ionenleitung mit Hilfe von Substanzen erzeugt werden, die wie viele Dichalkogenide von Übergangsmetallen (z.B. $TiS_2$) zur Einlagerung von Alkalimetallen befähigt sind und diese in Ionenform bei sich aufnehmen.

Voll befriedigende Entladeergebnisse sind aber nur dann zu erwarten, wenn an das aktive Kathodenmaterial auch die zu seiner Reduktion benötigten Elektronen vom Ableiter herangeführt werden können, also auch ein elektronenleitendes Leitmaterial vorhanden ist.

So ist es aus der DE-OS 23 18 161 bereits bekannt, in der positiven Elektrode eines Festkörperelektrolyt-Elements, deren negative Elektrode z.B. aus Kalium und deren Elektrolyt aus festem KOH besteht, neben Metallhalogeniden als Aktivmaterial elektronenleitenden Graphit einzusetzen. Außer Halogeniden des Kupfers, Silbers und Blei werden in dieser Druckschrift weitere Kathodenmaterialien wie Metalloxide, Halogene, Sauerstoff u.a.m. vorgeschlagen, ferner als Anodenmaterialien allgemein Alkalimetalle, alkalische Erden, Übergangs- und seltene Erdmetalle, wobei deren Auswahl in erster Linie unter den Gesichtspunkt einer möglichst guten chemischen Verträglichkeit mit dem Festkörperelektrolyten, einem wasserfreien Alkalihydroxid, gestellt ist.

Der Erfindung liegt hingegen die Aufgabe zugrunde, die positive Elektrode einer Festkörperzelle nach dem eingangs formulierten Gattungsbegriff anzugeben, die eine größtmögliche Strombelastbarkeit bei guter Masseausnutzung besitzt.

Die Aufgabe wird erfindungsgemäß dadurch gelöst, daß das reduzierbare aktive Material der positiven Elektrode von einem höherwertigen Metallchlorid gebildet ist.

Als Kathodenmaterial wird bei mehreren möglichen Metallchloriden stets das Metallchlorid mit der niedrigsten Oxidationsstufe ausgeschlossen; bevorzugt werden die Chloride der Übergangsmetalle.

Wie sich gezeigt hat, lassen sich Festkörperzellen mit erfindungsgemäßen Metallchloriden in der Kathode mit einer ungleich größeren Coulomb-Ausbeute entladen als Zellen, die als Kathodenmaterial Metallchloride enthalten, in denen das betreffende

Metall nur die jeweils unterste Oxidationsstufe einnimmt, beispielsweise $FeCl_2$ oder $PbCl_2$. Von diesen "niederen" Chloriden konnte zwar auch nur eine einstufige Entladung bei mäßiger Spannung entsprechend der Reduktion zum Metall erwartet werden, jedoch sollte die entnehmbare Kapazität zumindest angenähert dem Faraday-Äquivalent des eingesetzten niederen Chlorids entsprechen. Ebendies ist nicht der Fall, sondern es werden Entladekapazitäten von weniger als 10 % d.Th., dazu bei Entladeschlußspannungen von nur etwa 0,5 Volt, erzielt.

Demgegenüber ist bemerkenswert, daß erfindungsgemäße Zellen nicht nur über verschiedene Spannungsplateaus entsprechend den durchlaufenen Oxidationsstufen der mehrwertigen Chloride entladen werden, sondern daß auch die Coulomb-Ausbeute der theoretisch - auf Gewichtsbasis - entnehmbaren Kapazität nahekommt. Hierbei wird unterstellt, daß das mehrwertige Metallhalogenid gemäß

$$x\ Li\ +\ MeCl_x\ \longrightarrow\ Me\ +\ x\ LiCl$$

vollständig bis zum Metall umgesetzt wird.

Die erfindungsgemäß als aktives Kathodenmaterial einsetzbaren Metallhalogenide sind vorzugsweise $FeCl_3$, $MoCl_5$ und $WCl_6$. Besonders vorteilhaft ist es, die höherwertigen Halogenide mit einem Pulver des ihnen jeweils zugrundeliegenden Metalls zu untermischen. Alternativ sind aber auch Graphit oder Ruß als Leitmittel-Zusätze geeignet.

Der Festkörperelektrolyt in der erfindungsgemäßen Zelle ist mit Rücksicht auf die zu verwendende Lithiumanode vorzugsweise ein $Li^+$-Ionenleiter wie $Li_3N$, $LiJ$, $Li_xN_yCl_z$ oder ein $Li^+$-leitendes Glas.

Anhand einer Figur wird die vorteilhafte Leistungsabgabe erfindungsgemäßer Festkörperzellen im Vergleich zu analogen Zellausführungen mit niederen Chloriden als Kathoden verdeutlicht.

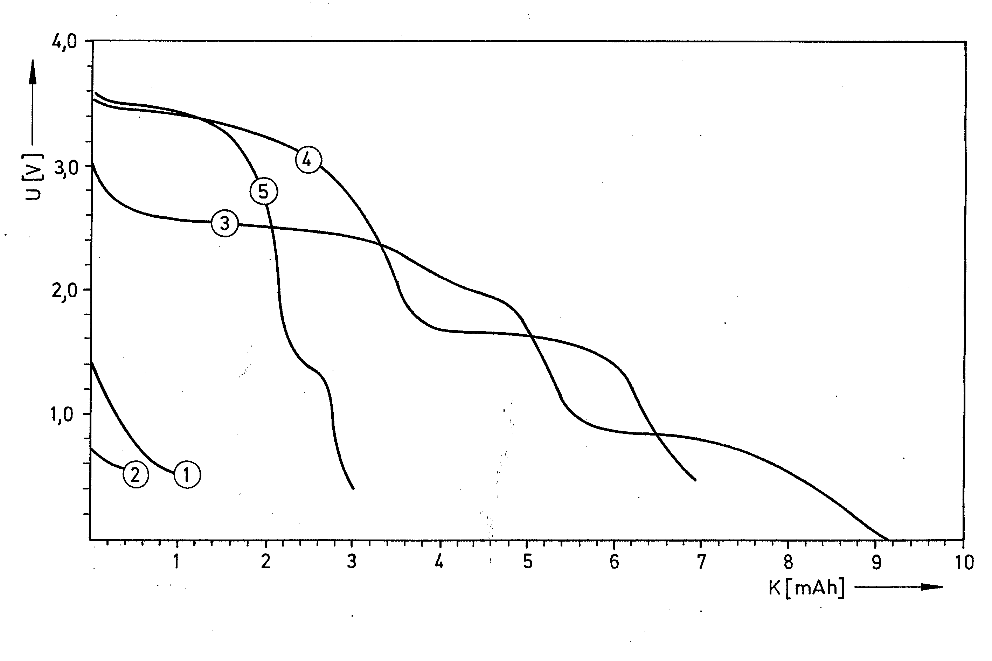

Die Figur zeigt an 5 Entladekurven von Versuchszellen den Verlauf der Entladespannung U $[V]$ in Abhängigkeit von der entnommenen Kapazität K $[mAh]$ . Die Entladekurven sind folgenden Zellen zugeordnet:

Kurve 1 : $Li/Li_3N/FeCl_2$ ⎫
Kurve 2 : $Li/Li_3N/PbCl_2$ ⎬ Vergleichssysteme
⎭

Kurve 3 : $Li/Li_3N/WCl_6$ ⎫
Kurve 4 : $Li/Li_3N/MoCl_5$ ⎬ erfindungsgemäß
Kurve 5 : $Li/Li_3N/FeCl_3$ ⎭

Die Einwaage an aktiver Kathodensubstanz war in allen Fällen so bemessen, daß sie bei Annahme eines vollständigen Reaktionsverlaufs nach der weiter vorn angegebenen Gleichung einem Äquivalent von 10 mAh entsprach. Allen Metallchloriden war ferner das dem Chlorid zugrundeliegende Metall als elektronenleitende Substanz beigemischt. Die geregelte Belastungsstromstärke betrug 15 μA/cm².

Wie aus den Kurven 1 und 2 ersichtlich, bleiben die Kapazitätsentnahmen bei den $FeCl_2$- und $PbCl_2$-Systemen weit hinter den Erwartungen zurück. Demgegenüber lassen die Kurven 3 - 5 nicht nur um ein Mehrfaches bessere Masseausnutzungen erkennen, sondern sie zeigen auch, daß nennenswerte Anteile des erfindungsgemäßen Kathodenmaterials (ca. 15%, 25%, 35%) auf deutlich ausgeprägten Spannungsplateaus in der Nähe von 3 Volt entladbar sind. Dies bringt einen weiteren Vorteil der erfindungsgemäßen Systeme über bekannte Jodid- oder Intercalationssysteme mit sich, nämlich die festkörpermäßige Realisierung von 3 Volt-Zellen.

0073292

Reg.-Nr. 6 FP 396-DT 6233 Kelkheim, den 25.08.1981
EAP-Dr.Ns/sd

VARTA Batterie Aktiengesellschaft
3000 Hannover 21, Am Leineufer 51

## Patentansprüche

1. Galvanische Festkörperzelle mit einer negativen Lithiumelektrode, einem Festkörperelektrolyten und einer festen, elektronisch-leitendes Material enthaltenden positiven Elektrode, die bei Raumtemperatur entladbar ist, dadurch gekennzeichnet, daß das reduzierbare aktive Material der positiven Elektrode von einem höherwertigen Metallchlorid gebildet ist.

2. Galvanische Festkörperzelle nach Anspruch 1, dadurch gekennzeichnet, daß das Metallchlorid $FeCl_3$, $MoCl_5$ oder $WCl_6$ ist.

3. Galvanische Festkörperzelle nach den Ansprüchen 1 und 2, dadurch gekennzeichnet, daß dem Metallchlorid das ihm jeweils zugrundeliegende Metall als Pulver beigemischt ist.

4. Galvanische Festkörperzelle nach den Ansprüchen 1 und 2, dadurch gekennzeichnet, daß dem Metallchlorid Grahpit oder Ruß beigemischt ist.

5. Galvanische Festkörperzelle nach den Ansprüchen 1 bis 4, dadurch gekennzeichnet, daß der Festkörperelektrolyt aus $Li_3N$, $LiJ$, $Li_xN_yCl_z$ oder $Li^{\pm}$-leitenden Gläsern besteht.

0073292

# EUROPÄISCHER RECHERCHENBERICHT

| | EINSCHLÄGIGE DOKUMENTE | | EP 82103622.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | <u>DE - A - 2 318 161</u> (P.R. MALLORY)<br>* Seite 2, Zeilen 5-9; Seite 3, Zeile 16 - Seite 4, Zeile 2; Seite 5, Zeilen 3-6 *<br>-- | 1,4 | H 01 M 6/18<br>H 01 M 4/58 |
| A | <u>DE - A1 - 3 039 900</u> (HITACHI)<br>(21-05-1981)<br>* Patentanspruch 1 *<br>-- | 5 | |
| A | <u>DE - A1 - 2 817 701</u> (P.R. MALLORY)<br>* Patentansprüche 1,3 *<br>---- | 1 | |
| | | | **RECHERCHIERTE SACHGEBIETE (Int. Cl. ³)**<br><br>H 01 M |

Der vorliegende Recherchenbericht wurde für alle Patentansprüche erstellt.

| Recherchenort | Abschlußdatum der Recherche | Prüfer |
|---|---|---|
| WIEN | 06-12-1982 | LUX |

EPA Form 1503. 03.82

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument